# EUROPEAN PATENT SPECIFICATION

(11) **EP 0 339 876 B1**
(45) Date of publication and mention of the grant of the patent: **12.01.1994**
(21) Application number: 89303974.3
(22) Date of filing: 21.04.1989
(51) Int. Cl.: G02B 6/38, H01R 13/453

(54) **Connector assembly with movable shroud protection**
Steckeraufbau mit beweglicher Schutzverkleidung
Montage de connecteur avec enveloppe de protection mobile

(30) Priority: 25.04.1988 US 185756
(43) Date of publication of application: 02.11.1989
(73) Proprietor: THE WHITAKER CORPORATION, Wilmington, Delaware 19808 (US)
(72) Inventor: Briggs, Robert Carl, Newport Pennsylvania 17074 (US); Thompson, Donald Wesley, Pennsylvania 17055 (US); Budd, Lloyd Royston, Harrisburg Pennsylvania 17103 (US); Weber, Robert Ney, Hummelstown Pennsylvania 17036 (US)
(74) Representative: Warren, Keith Stanley

(56) References cited:
- EP-A- 0 022 000
- EP-A- 0 137 665
- WO-A-86/00147
- US-A- 3 754 205
- US-A- 4 233 724

## Description

The specification describes a connector assembly for aligning a signal transmitting portion of a cable within an alignment housing.

A known connector assembly is disclosed in U.S. Patent 4,687,291, as a single fiber connector or as a duplex connector for connection to a corresponding optical fiber cable, a type of signal transmitting cable. Each optical fiber of the cable is a signal transmitting portion of the cable and is terminated with an alignment ferrule. An interconnecting member includes a housing into which the connector assembly is inserted and aligned. A ferrule aligning receptor corresponding to each alignment ferrule is located in the housing. When the connector assembly is inserted into and aligned in the housing, each alignment ferrule is aligned with and inserted into a corresponding bore of a receptor. The connector assembly includes a latch for latching to the housing.

Accordingly, a known connector assembly for aligning each signal transmitting portion of a cable within a cavity of a housing comprises; a signal transmitting cable, each signal transmitting portion of the cable being encircled by a corresponding alignment ferrule, a connector body encircling each alignment ferrule and moveable into the cavity to align each alignment ferrule for receipt by an alignment receptor located in the housing, the connector body having a body portion to which the cable is secured.

A connector assembly is known by different forms of construction. For example, a known connector assembly of U.S. Patent 4,611,887, is disclosed as a plug member for a fiber optic cable, a type of signal transmitting cable. Also disclosed is a receptacle member for another fiber optic cable. The receptacle member is located in a housing. The plug member is inserted and aligned in the housing for coupling with the receptacle member located in the housing. Receptors, into which the alignment ferrules of the plug member are inserted, are on the alignment ferrules of the receptacle member, and are located within the housing together with the receptacle member.

An alignment ferrule is known in various forms of construction, disclosed by way of example in U.S. Patents 4,233,724 and 4,303,304, and 4,440,469 and 4,646,688.

A ferrule aligning receptor located in a housing is known by various constructions such as that disclosed by way of example in the U.S. Patents.

In the known connector assembly, a front of the connector assembly provides an immobile shroud. The alignment ferrules are covered and protected by the shroud. Because the shroud is immobile, the housing in which the receptors are located must have dimensions to accommodate the shroud forwardly of the alignment ferrules. If the shroud were moveable to uncover the ferrules, the dimensions would no longer be required, and further the housing could be shortened.

The connector assembly according to the invention includes a shroud that covers and protects each alignment ferrule and is moveable to project each alignment ferrule outwardly of the shroud for receipt in a ferrule aligning receptor located in a housing. Once the ferrules are aligned within the housing for receipt by corresponding receptors, the housing will protect the ferrules, and thereby the shroud is unnecessary.

Although a moveable shroud is disclosed above as being useful, a latch is required to resist movement of the shroud so that the shroud remains in a position to cover and protect each alignment ferrule until the connector assembly is aligned within a housing, and the latch is constructed to permit movement of the shroud to uncover each ferrule for receipt by a corresponding receptor located in the housing.

The present invention consists in a connector assembly as defined in claim 1.

An embodiment of the invention will now be discribed by way of example with reference to the accompanying drawings.

Figure 1 is an enlarged fragmentary elevation view of a connector assembly with a shroud in a first position.

Figure 2 is a fragmentary perspective view with parts exploded of a connector body of the connector assembly as shown in Figure 1, and with the shroud removed.

Figure 3 is a fragmentary perspective view of the connector body and the shroud.

Figure 4 is a perspective view of a rear end of the shroud.

Figure 5 is an enlarged fragmentary elevation view of the connector assembly with the shroud in a second position.

Figure 6 is a fragmentary perspective view with parts exploded of a receptacle housing and a transceiver, together with the connector assembly.

Figure 7 is an elevation view in section of the transceiver shown in Figure 6 assembled to the receptacle housing and the connector assembly partially inserted in the receptacle housing.

Figure 8 is a section view taken along the line 8-8 of Figure 7.

Figure 9 is a section view taken along the line 9-9 of Figure 7.

Figure 10 is a view similar to Figure 7 illustrating complete insertion of the connector assembly into the receptacle housing.

Figure 11 is a section view taken along the line 11-11 of Figure 10.

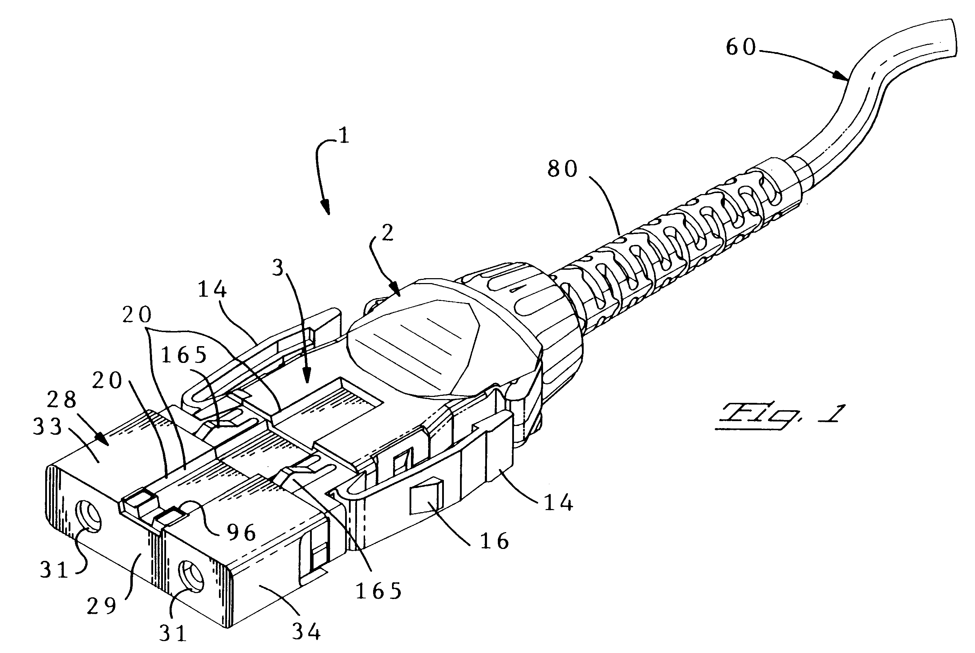

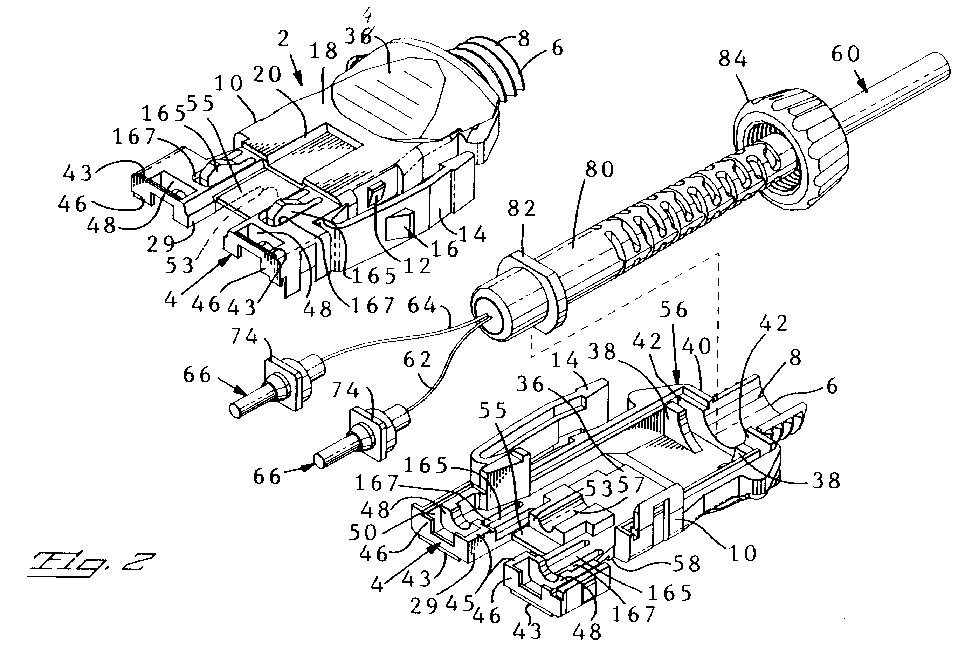

With reference to Figures 1 and 2 of the drawings, there is shown a connector assembly 1 for an optical fiber cable including a top portion 2 and a bottom portion 56 assembled together to provide a body portion 3. Each of portions 2 and 56 includes a corresponding front end 4, an externally threaded cable entry 8 on a rear portion 6, a corresponding latch or hasp 10, a corresponding lug 12, a latching arm 14 including a latching lug 16, an external gripping surface 34 near the cable entry projecting outwardly inclined toward the rear 6. The rear portion 6 projects from a transverse exterior wall 40. Adjacent to the wall 40 and extending into a hollow interior cavity 36 is an interior flange 38 facing each side of the cable entry 8, with a transverse slot 42 between each flange 38 and the wall 40. Extending into the hollow interior cavity 36 of each portion 2 and 56 are a pair of spaced apart transverse ridges 46 and 48, on either side of a gap 29 and connected by a ridge 45 along each side of the gap 29. A cavity 50 is between each pair of the spaced apart ridges 46 and 48. Rectangular recesses 52 and semicircular recesses 54 in the corresponding ridges 46 and 48 communicate with the cavities 50. The structure of the portions 2 and 56 extend toward corresponding open sides of the portions 2 and 56.

The body portions 2 and 56 are of unitary molded plastics construction and are duplicates of each other except for the following construction. The top portion 2 includes a channel or keyway 20 extending axially rearward from the front end 4 and recessed in an exterior side surface or side wall 18. A gap 29 is located in each front end 4, and in the portion 2 is aligned with the keyway 20. The bottom portion 56 has an exterior side surface or side wall 58 like the exterior wall 18 but without the recessed keyway 20.

With reference to Figure 2, an optical fiber cable 60 includes optical fibers 62 and 64 terminated by corresponding alignment ferrules 66 and 66. A radially extending flange 74 and a resilient ring 78 encircles each of the ferrules 66 and 66. A sleeve form strain relief 80 encircles the exterior of the cable 60 from which project the fibers 62 and 64. An internally threaded nut 84 rotatably encircles the strain relief 80 axially to the rear of a radially projecting flange 82 secured integrally with the strain relief 80.

The portions 2 and 56 are assembled to each other, with the open sides of the portions 2 and 56 facing each other. The portions 2 and 56 together encircle the strain relief 80, the flange 82, the fibers 62 and 64, the flanges 74 and 74, and the alignment ferrules 66 and 66. The strain relief 80 projects along each cable entry 8. The flange 82 is in each cavity 42. The fibers 62 and 64 extend along each interior cavity 36. The flanges 74 and ring 78 are received in corresponding cavities 50. The alignment ferrules project through the corresponding recesses 52 and 54 and from a front 4 of the body portion 3 formed by the portions 2 and 56. The portions 2 and 56 lock together by interengaged lugs 16 latched in corresponding latches or hasps 10. The nut 84 is threadably advanced along each rear portion 6 and against each rear wall 40.

Additional details of the connector assembly are incorporated herein by reference from the disclosure of the above referenced U.S. Patent Application. A connector assembly as disclosed in that Patent Application includes a shroud 28 that is immobile. The immobile shroud is not interchangeable with shrouds of different circumferential shapes adapted for alignment in different housings.

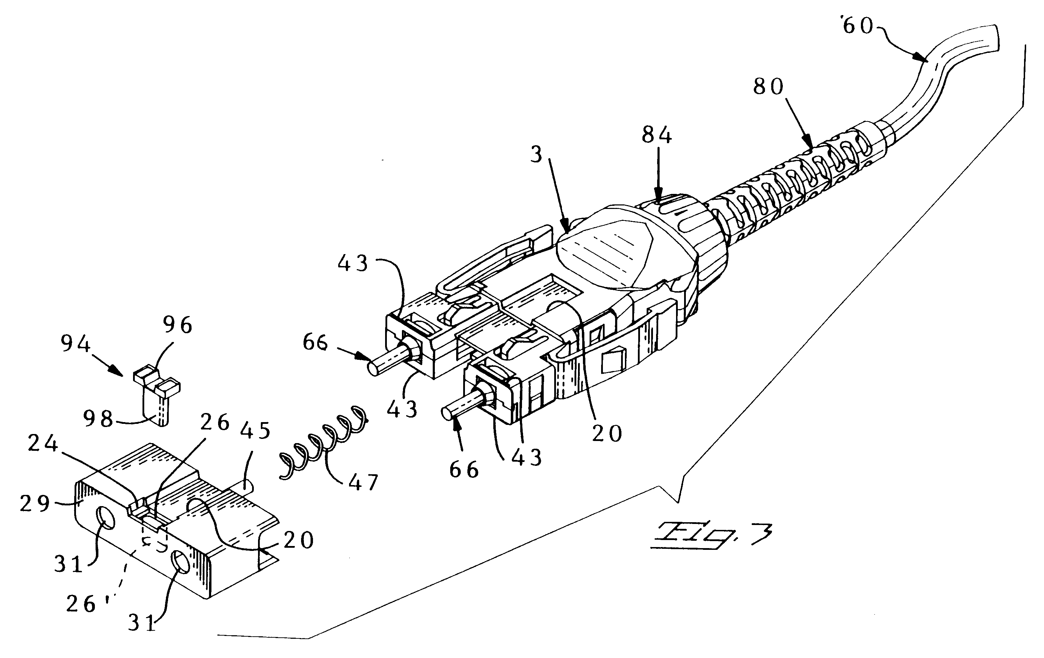

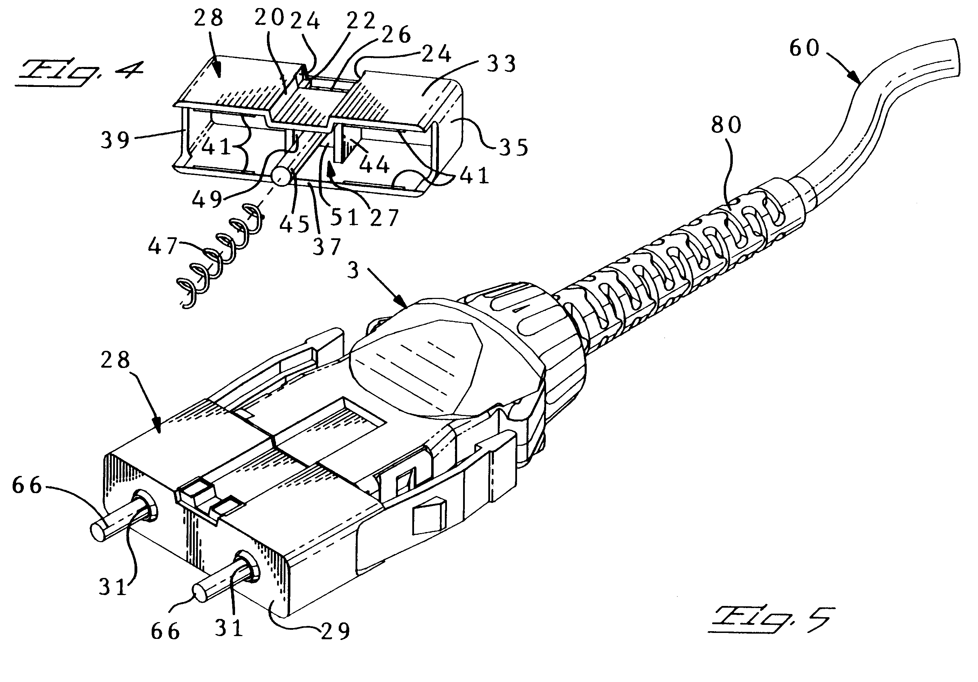

As shown in Figures 3 and 4, a removable shroud 28 of unitary molded plastics construction has a rear passage 27 for assembly over a front of the body portion 3. A front end of the shroud is defined by a front end wall 29 opposite the open end 27. The front end wall 29 has an opening 31 aligned with and corresponding to each alignment ferrule 66 and 66. Exterior circumferential side walls 33, 35, 37 and 39 extend rearwardly from the end wall 29 and encircle the passage 27. A plurality of interior facing ribs, each shown at 41, project transversely along the interiors of corresponding walls 33 and 37 and adjacent to the open end. Similar ribs, each shown at 43, project transversely along the exteriors of corresponding walls 18 and 58 of the body portion 3, and are adjacent the front end of the body 3. When the shroud 28 is being assembled to the body portion 3, or is being removed from the body portion 3, the ribs 41 interengage corresponding ribs 43 such that force must be exerted to displace the ribs 41 over and past the corresponding ribs 43. The interengaging ribs 41 and 43 form restraint means on the body portion 3 and the shroud 28 for restraining movement of the rear of the shroud 28 over the front of the body portion 3, and the restraint means is capable of deflection under forcible movement of the rear of the shroud 28 over the front of the body portion 3 during assembly or disassembly of the shroud 28.

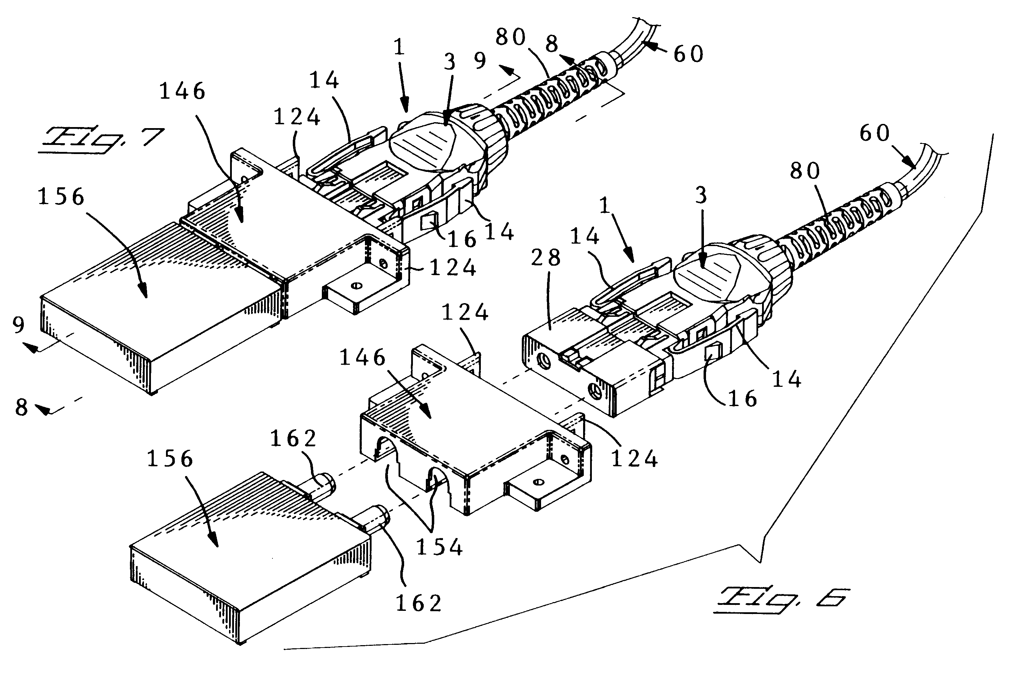

The shroud is in a first position covering the alignment ferrules 66 and 66. The shroud is moveable from the first position to a second shroud position uncovering the alignment ferrules 66 and 66 and to project them from the shroud 28 as shown in Figure 5. Further with reference to Figure 2, a moveable latch 163 is on each portion 2 and 56. The latch 163 includes a pair of spaced apart fingers 165. Each finger 165 is elongated axially forward toward the front of the connector body 3 and is formed by a slit 167 along three sides of the corresponding finger 165 and extending through the thickness of the corresponding wall 18 or 58. Each finger 165 is moveable separate from the other from a first position engaging the shroud to a second position inwardly into the connector body 3 permitting relative movement of the shroud 28 over said finger 165 to the second shroud position. Upon movement of the shroud to the second shroud position, each finger 165 will return by internal resilient spring action to the first position engaging the shroud and resisting movement of the shroud from the second shroud position.

With reference to Figures 1, 2 and 3, the side wall 33 overlies the wall 18 of the body portion 3. The keyway 20 extends, as shown in Figure 1, from the body portion 3, and in and along the side wall 33, to the front end 29 of the shroud 28. A detent or recess 22 is in the keyway 20 of the shroud 28, and extends laterally across and into the side walls of the keyway 20, forming notches in the side walls recessed in the outer surface 18. An aperture or passage 26 extends from the recess 22 transversely through the thickness of the shroud. The thickness forms a bulkhead 44 of rigid mass surrounding the passage 26. The passage 26 emerges as an aperture portion 26′ through the opposite exterior surface of the shroud. The passage is tapered along its length toward the aperture portion 26′.

A keying element or keying plug 94 of unitary construction includes a tapered elongated post 98 constructed for a friction fit in and along the passageway 26. The end of the post 98 is located at the aperture portion 26′ and is accessible to be urged against to displace the keying plug outwardly of the recess 22, thereby to be grasped and removed for replacement by a desired key of the type disclosed in U.S. Patent Application 112,118, filed October 26, 1987. The keying plug 94 includes an enlarged block form portion 96 conforming in dimensions to fit within the recess 22. Additional details of the keying structure are known from the disclosure of the above referenced U.S. Patent Application.

With reference to Figures 3 and 4, an axially extending rod 45 projects rearwardly from the bulkhead 44. A coil spring 47 encircles the rod 45 with a front end of the spring 47 received in a recess 49 of the bulkhead 44 and engaged against an axially recessed wall 51 of the bulkhead 44.

With reference to Figure 2, each portion 2 and 56 includes a rod support wall 53 projecting into the corresponding cavity 36 at a rear end of the gap 29. A front extending flange 55 of the rod support wall 53 recesses the rod support 55 along the gap 29. An axially extending passage 57 along the rod support 55 slidably encircles and supports the rod for reciprocation in the body portion 3. A rear end of the spring 47 engages the rod support wall 53 and is in compression between the wall 51 and the rod support wall 53 to bias the shroud to the first shroud position. A force is required against the shroud for movement of the shroud to the second shroud position against the bias of the spring 47. When the force is removed, the spring will bias and move the shroud to the fist shroud position covering and protecting the alignment ferrules 66 and 66. The interengaging ribs 41 and 43 resist the bias of the spring 47 to resist removal of the shroud form the connector body 3.

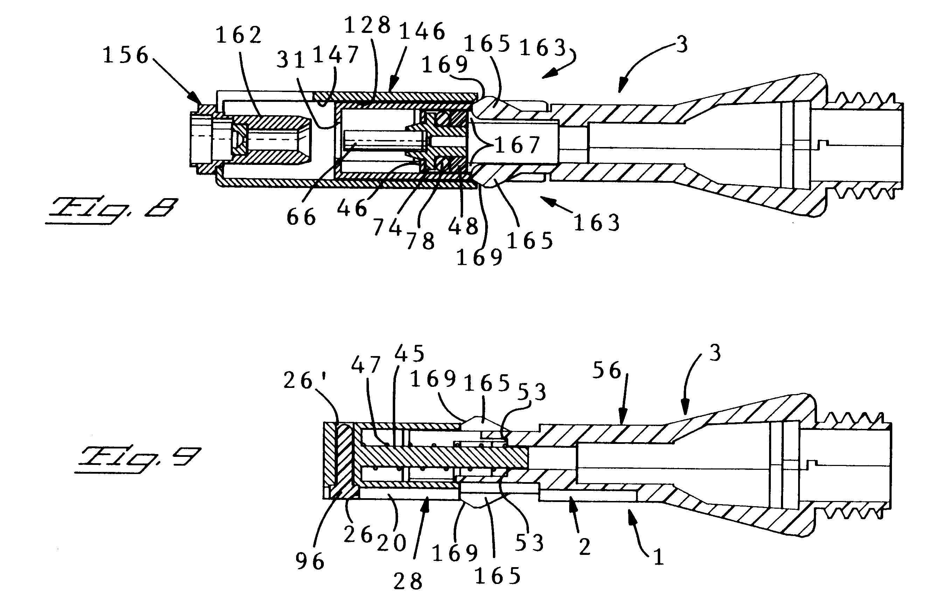

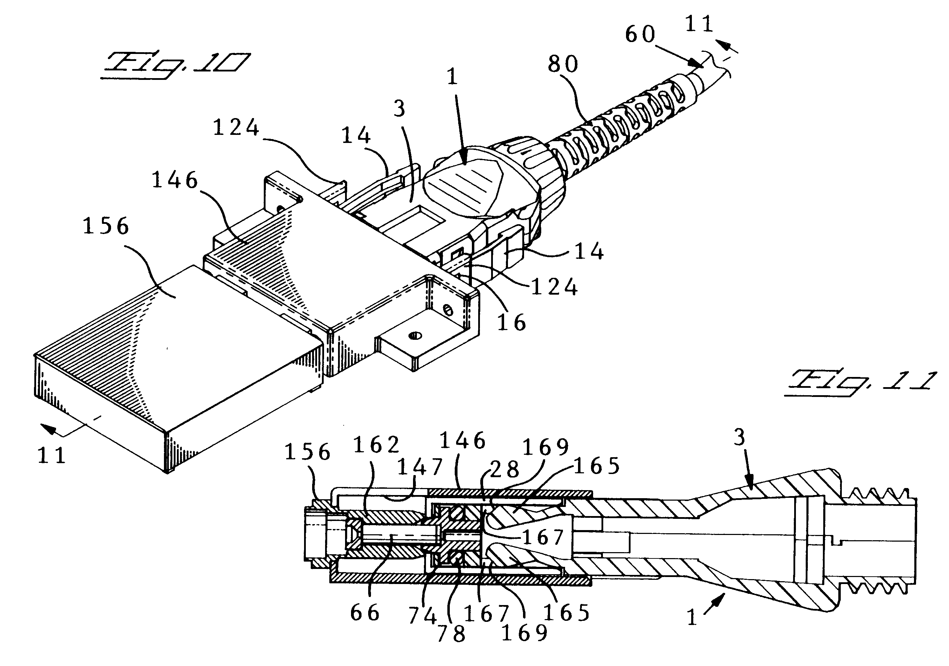

With reference to Figures 6 and 7, the connector assembly 1 including the shroud 28 is positioned for insertion and alignment in a receptacle or housing 146. By way of example, the above identified U.S. Patent Application discloses several types of receptacles or housings into which the connector assembly 1 is suitable for insertion and alignment. An input port 162 and an output port 162 of a transceiver 156 are assembled into corresponding openings 154 of the housing 146. The ports 162 and 162 are receptors of corresponding sleeve form for receiving and aligning corresponding alignment ferrules 66 and 66 with the transceiver, when the connector assembly 1 is received and aligned in the housing 146 for mateable connection with the transceiver 156.

With reference to Figures 7 and 8, the connector assembly 1 is shown with the shroud 28 in the first shroud position within the housing 146 assembled to the transceiver ports 162 and 162. The outer circumference of the shroud is less than the circumference of a cavity 147 of the housing 146 for receipt in the housing 146 and for aligning the connector assembly 1 in the housing 146 in preparation for mated connection of the alignment ferrules 162 and 162 by receipt in the corresponding receptors 162 and 162. The housing is keyed in a manner as disclosed in the above identified U.S. Patent Application to cooperate with the keying plug 96 or other keying plugs and to form keying combinations that will permit entry of the keying plug 96 or the other keying plugs within the cavity 147.

The shroud is in registration within the cavity 147 and is moveable to the second shroud position, as shown in Figures 5 and 10 and 11, to permit movement of the connector body 3 forwardly in the cavity 147. The lugs 16 on the latch arms 14 releasably lock in hasps 124 on the housing 146 to retain the connector assembly 1, in the housing 146.

Both fingers 165 of each latch 63 project outwardly beyond the shroud circumference for engaging the housing, and both fingers are required to be deflected by the housing to the corresponding second positions to permit movement of the shroud to the second shroud position.

Each of the fingers 165 of each latch 63 in a first latch position engages against the shroud 28 and resists movement of the shroud 28 from the first shroud position. Each of the fingers 165 of each latch 63 has a rearwardly inclined biasing surface 169 that projects outwardly beyond the shroud circumference for engaging the housing 146 and for deflection by the housing 146 to a second latch position, the fingers of each latch 63 in the second latch position permitting relative movement of the shroud 28 over the latch 63 to the second shroud position. The shroud 28 is moveable over the latch 63 and each of its fingers 165 to the second shroud position upon said deflection of each of the fingers 165 of each latch 63 by the housing 63 from the first latch position to the second latch position to project each alignment ferrule 66 and 66 outwardly of the shroud 28 for receipt by a corresponding receptor 162 and 162 located in the housing 146.

Other housings of different construction are known. The shroud 28 is removable and is adaptable with a different shape or different length for complementary alignment within a housing 146 of different shape or different length. The shroud 128 is removable for interchange with a shroud 128 of such different shape or different length.

## Claims

1. A connector assembly (1) for aligning each signal transmitting member (62,64) of a cable (60) with a corresponding receptor (162,162) located within a cavity (147) of a housing (146), comprising:
a plurality of alignment ferrules (66,66), the free end of each signal transmitting member (62,64) of the cable (60) being encircled by one of said corresponding alignment ferrules (66,66);
a connector body (3) having a rear end to which the cable (60) is secured and a front end from which each alignment ferrule (66,66) protrudes, said connector body being insertable into the cavity (147) of the housing (146) to align each alignment ferrule (66,66) for receipt by a corresponding alignment receptor (162,162) located in the housing (146); and
a shroud (28) mounted around the front end of the connector body (3);
characterised in that the shroud (28) is mounted for movement between a first longitudinal shroud position covering each alignment ferrule (66,66) and a second longitudinal shroud position to uncover each alignment ferrule (66,66); and by
a biasing member (47) between the connector body (3) and the shroud (28) for biasing the shroud (28) toward the first position, the connector body (3) further comprising:
a transversally deflectable latch (163) normally in a first transversal latch position for which the latch (163) projects outwardly beyond a circumference of the shroud (28) for engaging against the shroud (28) and resisting movement of the shroud (28) from its first longitudinal to its second longitudinal position, said latch (163) being deflectable by the housing (146), when the connector body provided with its shroud is inserted therein, to a second transversal latch position, the latch (163) in the second latch position permitting, upon further insertion of the connector body (3) in the housing (147), relative movement of the shroud (28) over the latch (163) to the second longitudinal shroud position, so as to project each alignment ferrule (66,66) outwardly of the shroud (28) for receipt by a corresponding receptor (162,162) located in the housing (147).

2. A connector assembly (1) as claimed in claim 1, characterised in that the shroud (28) has an external circumference which is less than the circumference of the cavity (147) to allow insertion of the shroud (28) within the cavity (147), the shroud (28) registering within the cavity (147) during relative movement of the shroud (28) over the latch (163) to the second shroud position.

3. A connector assembly (1) as claimed in claim 1 or 2, characterised in that the movable latch (163) is on the connector body (3), the shroud (28) extending forwardly of the latch (163) so as to extend within the cavity (147) of the housing (146) before engagement of the latch (163) with the housing (146).

4. A connector assembly (1) as claimed in claim 1, 2 or 3, characterised in that the latch (163) comprises a pair of spaced apart fingers (165,165), each finger (165,165) being movable separately from the other finger from a first position engaging the shroud (28) to a second position permitting relative movement of the shroud (28) over each said finger (165,165) to the second shroud position, both fingers (165,165) projecting outwardly beyond the circumference of the shroud for engaging the housing (146), and both fingers (165,165) requiring to be deflected by the housing (146) to their corresponding second positions to permit movement of the shroud (28) to the second shroud position.

5. A connector assembly (1) as claimed in any one of the preceding claims, characterised by openings (31,31) in a front end of the shroud (28) each opening (31,31) being aligned with a corresponding alignment ferrule (62,64) which projects through the opening (31,31) when the shroud (28) is in the second shroud position.

6. A connector assembly (1) as claimed in any one of the preceding claims, characterised by a rear passage (27) in the shroud (28), for assembly over the front of the connector body (3), and a restraint (163) on the housing portion and the shroud for restraining movement of the rear of the shroud (28) over the front of the connector body (3), the restraint (163) being capable of deflection under forcible movement of the rear of the shroud (28) over the front of the connector body (3) during assembly or disassembly of the shroud (28).

7. A connector assembly (1) as claimed in any one of the preceding claims, characterised by a keyway (20) extending from the front of the shroud (28) to the rear of the shroud (28), and along the connector body (3), a keying plug (94), and a recess (22) intersecting the keyway (20) in the front of the shroud (28), the keying plug (94) being mounted in the recess (22) and projecting into the keyway (20).

8. A connector assembly (1) as claimed in any one of the preceding claims, characterised in that a rod (45) on the shroud (28) extends towards the connector body (3), the biasing member (47) being a coil spring (47) encircling the rod (45), the connector body (3) including a wall (53), an opening (87) in the wall (53) receiving the rod (45), a rear end of the spring (47) opposing the wall (53).

## Patentansprüche

1. Verbinderanordnung (1) zum Ausrichten jedes Signalübermittlungsteils (62, 64) eines Kabels (60) mit einem entsprechenden Aufnahmeteil (162, 162), das innerhalb eines Hohlraums (147) eines Gehäuses (146) angeordnet ist, umfassend:
eine Vielzahl von Ausrichtungshülsen (66, 66), wobei das freie Ende jedes Signalübermittlungsteils (62, 64) des Kabels (60) von einer der entsprechenden Ausrichtungshülsen (66, 66) umgeben ist,
einen Verbinderkörper (3) mit einem rückwärtigen Ende, an dem das Kabel (60) befestigt ist, und mit einem vorderen Ende, von dem aus jede Ausrichtungshülse (66, 66) vorsteht, wobei der Verbinderkörper in den Hohlraum (147) des Gehäuses (146) einsetzbar ist, um jede Ausrichtungshülse (66, 66) für die Aufnahme durch ein entsprechendes Ausrichtungsaufnahmeteil (162, 162) auszurichten, das in dem Gehäuse (146) angeordnet ist, und
eine Abdeckung (28), die rund um das vordere Ende des Verbinderkörpers (3) angeordnet ist,
**dadurch gekennzeichnet**, daß die Abdeckung (28) zwischen einer ersten Längsabdeckungsstellung, die jede Ausrichtungshülse (66, 66) abdeckt, und einer zweiten Längsabdeckungsstellung, um jede Ausrichtungshülse (66, 66) abdeckungsfrei zu machen, bewegbar angeordnet ist, und durch
ein Vorspannteil (47) zwischen dem Verbinderkörper (3) und der Abdeckung (28) zum Vorspannen der Abdeckung (28) in Richtung auf die erste Stellung, wobei der Verbinderkörper (3) weiter verfügt über
eine quer auslenkbare Sperrklinke (163) normalerweise in einer ersten Quersperrstellung, für die die Sperrklinke (163) über einen Umfang der Abdeckung (28) nach außen vorsteht, um gegen die Abdeckung (28) zur Anlage zu kommen und um der Bewegung der Abdeckung (28) aus ihrer ersten Längsstellung zu ihrer zweiten Längsstellung einen Widerstand entgegenzusetzen, wobei die Sperrklinke (163) durch das Gehäuse (146) auslenkbar ist, wenn der Verbinderkörper, der mit seiner Abdeckung ausgestattet ist, darin zu einer zweiten Querverriegelungsstellung eingesetzt wird, während die Sperrklinke (163) in der zweiten Verriegelungsstellung bei weiterem Einsetzen des Verbinderkörpers (3) in dem Gehäuse (147) eine Relativbewegung der Abdeckung (28) über die Sperrklinke (163) hinweg zu der zweiten Längsabdeckungsstellung gestattet, damit so jede Ausrichtungshülse (66, 66) nach außen aus der Abdeckung (28) zur Aufnahme eines entsprechenden Aufnahmeteils (162, 162), das in dem Gehäuse (147) angeordnet ist, vorsteht.

2. Verbinderanordnung (1) nach Anspruch 1, **dadurch gekennzeichnet**, daß die Abdeckung (28) einen Außenumfang aufweist, der kleiner als der Außenumfang des Hohlraums (147) ist, um das Einsetzen der Abdeckung (28) innerhalb des Hohlraums (147) zu gestatten, wobei sich die Abdeckung (28) innerhalb des Hohlraums (147) während der Relativbewegung der Abdeckung (28) über die Sperrklinke (163) hinweg zu der zweiten Abdeckungsstellung einschiebt.

3. Verbinderanordnung (1) nach Anspruch 1 oder 2, **dadurch gekennzeichnet**, daß sich die bewegbare Sperrklinke (163) an dem Verbinderkörper (3) befindet, wobei sich die Abdeckung (28) vor der Sperrklinke (163) erstreckt, um sich innerhalb des Hohlraums (147) des Gehäuses (146) vor der Erfassung der Sperrklinke (163) durch das Gehäuse (146) zu erstrecken.

4. Verbinderanordnung (1) nach Anspruch 1, 2 oder 3, **dadurch gekennzeichnet**, daß die Sperrklinke (163) über ein Paar zueinander beabstandete Finger (165, 165) verfügt, wobei jeder Finger (165, 165) separat gegenüber dem anderen Finger aus einer ersten Stellung, in der er die Abdeckung (28) berührt, zu einer zweiten Stellung bewegbar ist, die eine Relativbewegung der Abdeckung (28) über jedem Finger (165, 165) hinweg zu der zweiten Abdeckungsstellung gestattet, wobei beide Finger (165, 165) nach außen über den Umfang der Abdeckung hinaus zur Berührung des Gehäuses (146) vorstehen und beide Finger (165, 165) eine Auslenkung mittels des Gehäuses (146) zu ihrer entsprechenden zweiten Stellung erforderlich machen, um die Bewegung der Abdeckung (28) zu der zweiten Abdeckungsstellung zu gestatten.

5. Verbinderanordnung (1) nach irgendeinem der vorhergehenden Ansprüche, **gekennzeichnet durch** Öffnungen (31, 31) in einem vorderen Ende der Abdeckung (28), wobei jede Öffnung (31, 31) mit einer entsprechenden Ausrichtungshülse (62, 64) fluchtet, die durch die Öffnung (31, 31) vorsteht, wenn sich die Abdeckung (28) in der zweiten Abdeckungsstellung befindet.

6. Verbinderanordnung (1) nach irgendeinem der vorhergehenden Ansprüche, **gekennzeichnet durch** einen rückwärtigen Durchlaß (27) in der Abdeckung (28) zur Anordnung über dem Vorderteil des Verbinderkörpers (3) und durch eine Rückhaltung (163) an dem Gehäusebereich und der Abdeckung für eine einschränkende Bewegung des rückwärtigen Teils der Abdeckung (28) über den vorderen Teil des Verbinderkörpers (3), wobei die Rückhaltung (163) unter Zwangsbewegung des rückwärtigen Teils der Abdeckung (28) über den vorderen Teil des Verbinderkörpers (3) während des Anbaus oder Abbaus der Abdeckung (28) auslenkbar ist.

7. Verbinderanordnung (1) nach irgendeinem der vorhergehenden Ansprüche, **gekennzeichnet durch** eine Keilnut (20), die sich von dem vorderen Teil der Abdeckung (28) zu dem rückwärtigen Teil der Abdeckung (28) und entlang des Verbinderkörpers (3) erstreckt, durch einen Keilstecker (94) und eine Aussparung (22), die die Keilnut (20) in dem vorderen Teil der Abdeckung (28) kreuzt, wobei der Keilstecker (24) in der Ausnehmung (22) angeordnet ist und in die Keilnut (20) vorsteht.

8. Verbinderanordnung (1) nach irgendeinem der vorhergehenden Ansprüche, **dadurch gekennzeichnet**, daß sich ein Stift (45) an der Abdeckung (28) in Richtung auf den Verbinderkörper (3) erstreckt, wobei das Vorspannteil (47), das eine Schraubenfeder (47) ist, den Stift (45) umgibt, der Verbinderkörper (3) eine Wand (53) aufweist, eine Öffnung (87) in der Wand (53) den Stift (45) aufnimmt und das rückwärtige Ende der Feder (47) der Wand (53) gegenüberliegt.

## Revendications

1. Assemblage de connecteur (1) pour aligner chaque élément (62, 64) de transmission de signaux d'un câble (60) avec un récepteur correspondant (162, 162) placé à l'intérieur d'une cavité (147) d'un boitier (146) comportant :
plusieurs viroles d'alignement (66, 66), l'extrémité libre de chaque élément (62, 64) de transmission de signaux du câble (60) étant entourée par l'une desdits viroles d'alignement correspondantes (66, 66) ;
un corps (3) de connecteur ayant une extrémité arrière à laquelle le câble (60) est fixé et une extrémité avant de laquelle chaque virole d'alignement (66, 66) dépasse, ledit corps du connecteur pouvant être inséré dans la cavité (147) du boîtier (146) pour aligner chaque virole d'alignement (66, 66) pour qu'elle soit reçue par un récepteur d'alignement correspondant (162, 162) situé dans le boîtier (146) ; et
un bouclier (28) monté autour de l'extrémité avant du corps (3) du connecteur ;
caractérisé en ce que le bouclier (28) est monté de façon à se déplacer entre une première position longitudinale du bouclier recouvrant chaque virole d'alignement (66, 66) et une seconde position longitudinale du bouclier découvrant chaque virole d'alignement (66,66) ; et par
un élément de rappel (47) entre le corps (3) du connecteur et le bouclier (28) pour rappeler le bouclier (28) vers la première position, le corps (3) du connecteur comportant en outre :
un verrou (163) pouvant être dévié transversalement, normalement dans une première position transversale de verrouillage pour laquelle le verrou (163) fait saillie vers l'extérieur au-delà d'une circonférence du bouclier (28) pour porter contre le bouclier (28) et résister à un mouvement du bouclier (28) depuis sa première position longitudinale vers sa seconde position longitudinale, ledit verrou (163) pouvant être dévié par le boîtier (146), lorsque le corps du connecteur pourvu de son bouclier est inséré dans celui-ci, vers une seconde position transversale de verrouillage, le verrou (163) dans la seconde position de verrouillage permettant, lors d'une poursuite de l'insertion du corps (3) du connecteur dans le boîtier (147), un mouvement relatif du bouclier (28) au-dessus du verrou (163) vers la seconde position longitudinale du bouclier, afin d'amener chaque virole d'alignement (66, 66) à faire saillie vers l'extérieur du bouclier (28) pour être reçue dans un récepteur correspondant (162, 162) situé dans le boîtier (147).

2. Assemblage de connecteur (1) selon la revendication 1, caractérisé en ce que le bouclier (28) présente une circonférence extérieure qui est inférieure à la circonférence de la cavité (147) pour permettre une insertion du bouclier (28) dans la cavité (147), le bouclier (28) s'alignant à l'intérieur de la cavité (147) durant un mouvement relatif du bouclier (28) par-dessus le verrou (163) vers la seconde position du bouclier.

3. Assemblage de connecteur (1) selon la revendication 1 ou 2, caractérisé en ce que le verrou mobile (163) est sur le corps (3) du connecteur, le bouclier (28) s'étendant vers l'avant du verrou (163) de façon à pénétrer dans la cavité (147) du boîtier (146) avant l'engagement du verrou (163) avec le boîtier (146).

4. Assemblage (1) de connecteur selon la revendication 1, 2 ou 3, caractérisé en ce que le verrou (163) comporte deux doigts espacés (165, 165), chaque doigt (165, 165) pouvant être déplacé indépendamment de l'autre doigt depuis une première position engageant le bouclier (28) jusqu'à une seconde position permettant un mouvement relatif du bouclier (28) par-dessus chacun desdits doigts (165, 165) jusqu'à la seconde position du bouclier, les deux doigts (165, 165) faisant saillie vers l'extérieur au-delà de la circonférence du bouclier pour engager le boîtier (146), et les deux doigts (165, 165) devant être déviés par le boîtier (146) vers leurs secondes positions correspondantes pour permettre un mouvement du bouclier (28) vers sa seconde position.

5. Assemblage (1) de connecteur selon l'une quelconque des revendications précédentes, caractérisé par des ouvertures (31, 31) dans une extrémité avant du bouclier (28), chaque ouverture (31, 31) étant alignée avec une virole d'alignement correspondante (62, 64) qui fait saillie à travers l'ouverture (31, 31) lorsque le bouclier (28) est dans sa seconde position.

6. Assemblage (1) de connecteur selon l'une quelconque des revendications précédentes, caractérisé par un passage arrière (27) dans le bouclier (28), pour un assemblage sur la partie avant du corps (3) du connecteur, et un élément (163) de retenue sur la partie du boitier et sur le bouclier pour s'opposer à un mouvement de la partie arrière du bouclier (28) sur la partie avant du corps (3) du connecteur, l'élément (163) de retenue pouvant être déformé sous un mouvement à force de la partie arrière du bouclier (28) sur la partie avant du corps (3) du connecteur durant le montage ou le démontage du bouclier (28).

7. Assemblage (1) de connecteur selon l'une quelconque des revendications précédentes, caractérisé par une rainure (20) s'étendant depuis la partie avant du bouclier (28) vers l'arrière de celui-ci, et le long du corps (3) du connecteur, une fiche (94) de clavetage et un évidement (22) coupant la rainure (20) dans la partie avant du bouclier (28), la fiche (94) de clavetage étant montée dans l'évidement (22) et faisant saillie dans la rainure (20).

8. Assemblage (1) de connecteur selon l'une quelconque des revendications précédentes, caractérisé en ce qu'un tige (45) sur le bouclier (28) s'étend vers le corps (3) du connecteur, l'élément de rappel (47) étant un ressort hélicoïdal (47) entourant la tige (45), le corps (3) du connecteur comprenant une paroi (53), une ouverture (87) dans la paroi (53) recevant la tige (45), une extrémité arrière du ressort (47) étant opposée à la paroi (53).
